# EUROPEAN PATENT APPLICATION

(11) **EP 3 674 039 A1**
(43) Date of publication of application: **01.07.2020**
(21) Application number: 17922778.0
(22) Date of filing: 08.11.2017
(51) Int. Cl.: B25J 9/16, B25J 9/04, B25J 9/10, B25J 18/04

(54) **DEVICE, METHOD AND SYSTEM FOR TEACHING ROBOT**

(30) Priority: 21.08.2017 KR 20170105511
(71) Applicant: Hanwha Precision Machinery Co., Ltd., Changwon-si, Gyeongsangnam-do 51552 (KR)
(72) Inventor: SONG, Chang Woo, Changwon-si, Gyeongsangnam-do 51552 (KR); JEONG, Jae Ho, Changwon-si, Gyeongsangnam-do 51552 (KR)
(74) Representative: Gulde & Partner
(86) International application number: PCT/KR2017/012595
(87) International publication number: WO 2019/039654

(57) **Abstract**

A method of teaching a robot capable of maintaining constant a direction in which an end faces and including N joints (N is a natural number) according to an embedment of the present disclosure includes: obtaining a reference direction in which the end is to face; calculating angles of M joints (M is a natural number, and N>M) from among the N joints to correspond to teaching of a user with respect to the robot; and calculating angles of remaining joints so that the end faces in the reference direction, based on the angles of the M joints. In this case, the remaining joints may be joints other than the M joints from among the N joints.

## Description

### TECHNICAL FIELD

Embodiments of the present disclosure relate to a device, method, and system for teaching a robot.

### BACKGROUND ART

With the rapid advancement of technology, robots play important roles as tools for performing various tasks on behalf of humans. Robots may automatically perform a variety of tasks such as supplying, assembling, welding, and painting on production lines of manufactories in a similar manner to human arms, but with improved productivity

There are cases where robots operate according to the teaching of users, and a technology for improving the accuracy of an operation of a robot according to teaching is required.

### DESCRIPTION OF EMBODIMENTS

### TECHNICAL PROBLEM

The present disclosure provides a method, device, and system of teaching a robot to maintain constant a direction in which an end of the robot faces during teaching.

Also, the present disclosure provides a method, device, and system for teaching a robot which may enable an end of the robot to more easily satisfy a certain requirement according to the teaching of a user.

Also, the present disclosure provides a method, device, and system for teaching a robot which may use some joints to maintain constant a direction in which an end of the robot faces, in a general articulated robot.

Also provided are a method, device, and system for teaching a robot to provide more accurate and precise teaching.

### SOLUTION TO PROBLEM

A method of teaching a robot capable of maintaining constant a direction in which an end faces and including N joints (N is a natural number) according to an embodiment of the present disclosure includes: obtaining a reference direction in which the end is to face; calculating angles of M joints (M is a natural number, and N>M) from among the N joints to correspond to teaching of a user with respect to the robot; and calculating angles of remaining joints so that the end faces in the reference direction, based on the angles of the M joints. In this case, the remaining joints may be joints other than the M joints from among the N joints.

The teaching may be performed by a physical manipulation of the user with respect to the robot, wherein the calculating of the angles of the M joints includes driving the M joints to correspond to the angles of the M joints according to the physical manipulation of the user with respect to the robot.

The teaching may be performed by a control signal for at least one of the M joints, and the control signal may be generated by a manipulation of an input unit by the user, wherein the calculating of the angles of the M joints includes driving at least one of the M joints according to the control signal for the at least one of the M joints.

The calculating of the angles of the remaining joints may include driving the remaining joints based on the calculated angles of the remaining joints.

The remaining joints may be joints continuous and closest to the end from among the N joints. N may be 6, and M may be 3. The reference direction may be a direction perpendicular to a working plane of the robot.

A device for teaching a robot capable of maintaining constant a direction in which an end faces and including N joints (N is a natural number) according to an embodiment of the present disclosure includes a controller, wherein the controller is configured to: obtain a reference direction in which the end is to face; calculate angles of M joints (M is a natural number, and N>M) from among the N joints to correspond to teaching of a user with respect to the robot; and calculate angles of remaining joints so that the end faces in the reference direction, based on the angles of the M joints. In this case, the remaining joints may be joints other than the M joints from among the N joints

The teaching may be performed by a physical manipulation of the user with respect to the robot, wherein the controller is further configured to drive the M joints to correspond to the angles of the M joints according to the physical manipulation of the user with respect to the robot.

The teaching may be performed by a control signal for at least one of the M joints, and the control signal may be generated by a manipulation of an input unit by the user, wherein the controller is further configured to drive at least one of the M joints according to the control signal for the at least one of the M joints.

The controller may be further configured to drive the remaining joints based on the calculated angles of the remaining joints.

The remaining joints may be joints continuous and closest to the end from among the N joints. N may be 6, and M may be 3. The reference direction may be a direction perpendicular to a working plane of the robot.

A system for teaching a robot to maintain constant a direction in which an end of the robot faces during teaching according to an embodiment of the present disclosure includes: the robot including N joints (N is a natural number); and a robot teaching device configured to control the robot to maintain constant the direction in which the end of the robot faces. In this case, the robot teaching device may be further configured to obtain a reference direction in which the end of the robot is to face, calculate angles of M joints (M is a natural number, and N>M) from among the N joints to correspond to teaching of a user with respect to the robot, and calculate angles of remaining joints so that the end faces in the reference direction, based on the angles of the M joints, In this case, the remaining joints may be joints other than the M joints from among the N joints.

The teaching may be performed by a physical manipulation of the user with respect to the robot, wherein the robot teaching device is further configured to drive the M joints to correspond to the angles of the M joints according to the physical manipulation of the user with respect to the robot.

The teaching may be performed by a control signal for at least one of the M joints, and the control signal may be generated by a manipulation of an input unit by the robot teaching device of the user, wherein the robot teaching device is further configured to drive at least one of the M joints according to the control signal for the at least one of the M joints.

The robot teaching device may be further configured to drive the remaining joints based on the calculated angles of the remaining joints. The remaining joints may be joints continuous and closest to the end from among the N joints.

Other aspects, features, and advantages of the present disclosure will become more apparent from the drawings, the claims, and the detailed description.

### ADVANTAGEOUS EFFECTS OF DISCLOSURE

According to embodiments of the present disclosure, a method, device, and system for teaching a robot which may maintain constant a direction in which an end of the robot faces during teaching may be realized.

Also, a method, device, and system for teaching a robot which may enable an end of the robot to more easily satisfy a certain requirement according to the teaching of a user may be realized.

Also, a method, device, and system for teaching a robot which may use some joints to maintain constant a direction in which an end of the robot faces, in a general articulated robot.

Also, a method, device, and system for teaching a robot which may enable more accurate and precise teaching may be realized.

### BRIEF DESCRIPTION OF DRAWINGS

FIG. 1 illustrates a robot system according to an embodiment of the present disclosure.
FIG. 2 is a view for describing a method performed by a controller to control a robot according to the teaching of a user according to an embodiment of the preset disclosure.
FIG. 3 is a view for describing a direction of an end after teaching of the robot according to an embodiment of the present disclosure.
FIG. 4 is a view for describing a direction of the end after teaching of the robot according to the prior art.
FIG. 5 is a flowchart for describing a method of teaching a robot performed by a robot teaching device of FIG. 1.

### BEST MODE

A method of teaching a robot capable of maintaining constant a direction in which an end faces and including N joints (N is a natural number) according to an embodiment of the present disclosure includes: obtaining a reference direction in which the end is to face; calculating angles of M joints (M is a natural number, and N>M) from among the N joints to correspond to teaching of a user with respect to the robot; and calculating angles of remaining joints so that the end faces in the reference direction, based on the angles of the M joints. In this case, the remaining joints may be joints other than the M joints from among the N joints.

### MODE OF DISCLOSURE

As the present disclosure allows for various changes and numerous embodiments, exemplary embodiments will be illustrated in the drawings and described in detail in the written description. However, this is not intended to limit the present disclosure to particular modes of practice, and it is to be appreciated that all changes, equivalents, and substitutes that do not depart from the spirit and technical scope of the present disclosure are encompassed in the present disclosure. In the description of the present disclosure, certain detailed explanations of the prior art are omitted when it is deemed that they may unnecessarily obscure the essence of the present disclosure.

While such terms as "first," "second," etc., may be used to describe various components, such components must not be limited to the above terms. The above terms are used only to distinguish one component from another.

The terms used in the following embodiments are merely used to describe exemplary embodiments, and are not intended to limit the present disclosure. An expression used in the singular encompasses the expression of the plural, unless it has a clearly different meaning in the context. In the following embodiments, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Embodiments of the present disclosure may be described in terms of functional block components and various processing steps. Such functional blocks may be realized by any number of hardware and/or software components configured to perform specific functions. For example, embodiments of the present disclosure may employ various integrated circuit (IC) components, e.g., memory elements, processing elements, logic elements, look-up tables, and the like, which may carry out a variety of functions under the control of one or more microprocessors or other control devices. Similarly, where the elements of the present disclosure are implemented using software programming or software elements, the present disclosure may be implemented with any programming or scripting language such as C, C++, Java, assembler language, or the like, with the various algorithms being implemented with any combination of data structures, objects, processes, routines or other programming elements. Functional aspects may be implemented in algorithms that are executed on one or more processors. Furthermore, the present disclosure could employ any number of conventional techniques for electronics configuration, signal processing, and/or data processing. The words "mechanism," "element," "means," and "configuration" are used broadly and are not limited to mechanical or physical embodiments. The words may include software routines in conjunction with processors, etc.

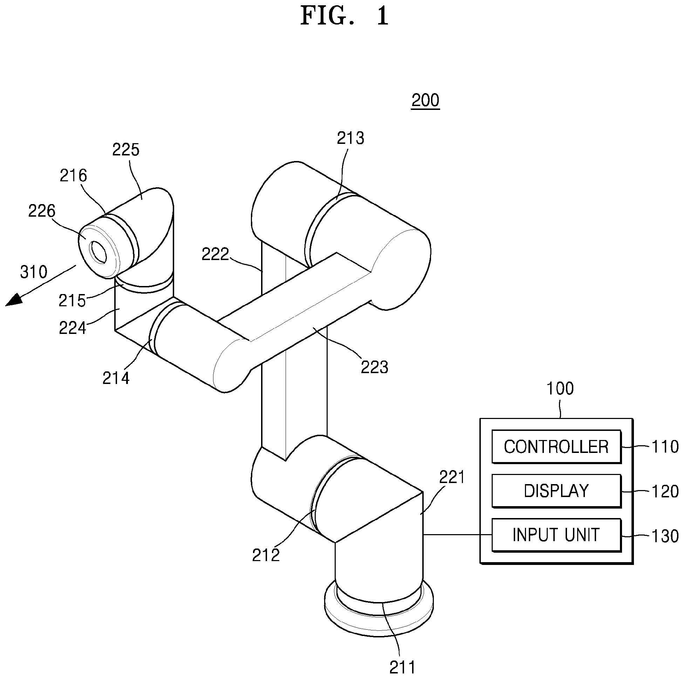

FIG. 1 illustrates a robot system according to an embodiment of the present disclosure.

Referring to FIG. 1, the robot system according to an embodiment of the present disclosure may include a robot teaching device 100 and a robot 200. The robot system according to an embodiment of the present disclosure may maintain constant a direction in which an end of the robot 200 faces, despite the teaching of a user with respect to the robot 200.

The term 'teaching' used herein may refer to a process of allowing the user to manipulate the robot 200 so that the robot 200 takes a specific posture.

In this case, the term 'manipulation' may refer to a process of allowing the user to apply a physical force to the robot 200 so that the robot 200 takes a specific posture. In this case, some joints (e.g., 211 through 213) of the robot 200 may be appropriately set to have a resistance force enough to be rotatable by the user. In other words, when the user teaches the robot 200 through a physical manipulation, a rotating torque for maintaining a posture of a joint may be set to an intensity such that a rotation angle is changeable by the user.

The term 'manipulation' may refer to a process of allowing the user to manipulate an input unit of the robot 200 so that a control signal is generated and the robot 200 takes a specific posture according to the control signal. In more detail, a manipulation of the user may refer to a process of inputting angles of some joints (e.g., 211 through 213) or inputting positions of some parts (e.g., 221 through 223). Alternatively, a manipulation of the user may refer to a process of dragging or clicking on a shape of the robot 200 displayed on a display 120. However, this is merely an example, and the spirit of the present disclosure is not limited thereto.

The term 'posture' of the robot 200 used herein may refer to a specific state of the robot 200 in a three-dimensional (3D) space. For example, when the robot 200 is an articulated robot, a 'posture' of the robot 200 may refer to at least one from among a rotation angle of each joint, a position of each part in a 3D space, and a driving condition of an actuator constituting each joint when the robot 200 is in a specific state.

The robot 200 according to the present disclosure may be a device including one or more actuators and one or more parts. In this case, the term 'actuator' may refer to any of various devices for converting electrical energy into kinetic energy based on a control signal. For example, the actuator may be any one of a direct current (DC) servomotor, an alternating current (AC) servomotor, a stepping motor, a linear motor, a hydraulic cylinder, a hydraulic motor, a pneumatic cylinder, and a pneumatic motor. However, this is merely an example, and the spirit of the present disclosure is not limited thereto.

The term 'part' may refer to a structure for fixing the actuator at a specific position or a structure fixed to the actuator to be movable.

The robot 200 according to an embodiment of the present disclosure may be any one of, for example, an articulated robot, a selective compliance assembly robot arm (SCARA) robot, and a cylindrical robot. The articulated robot may be a robot having one or more joints and parts (or bodies) for connecting different joints. The SCARA robot may be a robot including an arm that operates in a specific plane. The cylindrical robot may be a robot including an arm that has at least one rotary joint and at least one prismatic joint. However, this is merely an example, and the spirit of the present disclosure is not limited thereto. Accordingly, as described above, any device including one or more actuators and one or more parts and operating according to a control signal may be the robot 200 according to the present disclosure.

For convenience of explanation, it is assumed in the following description that the robot 200 is an articulated robot having N joints and parts for connecting the joints as shown in FIG. 1. In more detail, it is assumed in the following description that the robot 200 includes six joints 211, 212, 213, 214, 215, and 216 and six parts 221, 222, 223, 224, 225, and 226, and each of the six joints 211, 212, 213, 214, 215, and 216 includes an angle measuring means for measuring a rotation angle of a joint. Also, it is assumed in the following description that the part 221 from among the six parts 221, 222, 223, 224, 225, and 226 of the robot 200 is fixed to the ground.

The robot teaching device 100 according to an embodiment of the present disclosure that is a device for controlling and/or teaching the robot 200 may include a controller 110, the display 120, and an input unit 130.

The controller 110 according to an embodiment of the present disclosure may drive some joints according to the teaching of the user, and may drive remaining joints according to a certain condition. In this case, the controller 110 may include any type of device capable of processing data such as a processor. The term 'processor' may refer to a data processing device embedded in hardware and having physical circuitry to carry out code or instructions of a program. Examples of the data processing device embedded in the hardware may include, but are not limited to, a microprocessor, a central processing unit (CPU), a processor core, a multiprocessor, an application-specific integrated circuit (ASIC), and a field programmable gate array.

The display 120 according to an embodiment of the present disclosure may display a current operation state of the robot 200. Accordingly, the display 20 may refer to a display device for displaying figures, letters, or images. For example, the display 120 may include any one from among, but not limited to, a cathode ray tube (CRT), a liquid crystal display (LCD), a plasma display panel (PDP), a light-emitting diode (LED), and an organic light-emitting diode (OLED).

The input unit 130 according to an embodiment may refer to any of various means for obtaining an input of the user. For example, the input unit 130 may be a keyboard, a mouse, a trackball, a microphone, a button, or a combination thereof. Also, the input unit 130 may refer to, but is not limited to, a touch unit for inputting a touch to the display 120. However, this is merely an example, and the spirit of the present disclosure is not limited thereto.

Although not shown in FIG. 1, the robot teaching device 100 according to an embodiment of the present disclosure may further include a communicator (not shown) and a memory (not shown).

In this case, the communicator (not shown) may be a device including hardware and software needed to transmit/receive a control signal through wired/wireless connection between the robot teaching device 100 and an external device such as the robot 200.

The memory (not shown) temporarily or permanently stores data processed by the robot teaching device 100. The memory may include, but is not limited to, a magnetic storage medium or a flash storage medium.

The robot teaching device 100 according to an embodiment of the present disclosure may be separated from the robot 200 and/or a robot control device (not shown) as shown in FIG. 1. Alternatively, the robot teaching device 100 may be included in the robot 200 and/or the robot control device (not shown). In other words, the robot 200 and/or the robot control device (not shown) may perform a method of teaching a robot according to an embodiment of the present disclosure. However, for convenience of explanation, it is assumed in the following description that the robot teaching device 100 is separately provided as shown in FIG. 1.

The controller 110 of the robot teaching device 100 according to an embodiment of the present disclosure may control the robot 200 to maintain constant a direction in which an end of the robot 200 faces during a teaching process.

The term 'end' of the robot 200 used herein may refer to a part closest to a target object of a task of the robot 200. For example, when the robot 200 is an articulated robot as shown in FIG. 1, because the part 226 is a last part and is closest to the target object, the part 226 may become an end of the robot 200. For convenience of explanation, the part 226 and the end are used interchangeably.

The controller 110 according to an embodiment of the present disclosure may obtain a reference direction 310 in which the end 226 of the robot 200 is to face.

The term 'reference direction 310' used herein may refer to a direction in which the end 226 of the robot 200 is to face, despite a change in a posture of the robot 200 according to teaching. In this case, the reference direction may be a direction perpendicular to a working plane in a 3D space, or a southward direction.

The reference direction 310 may be obtained by using the teaching of the user with respect to the reference direction 310. For example, the user may set the reference direction 310 by physically manipulating each part of the robot 200 including the end 226 so that the end 226 of the robot 200 faces in the reference direction 310 that is to be set by the user.

Also, the reference direction 310 may be obtained when the user manipulates the input unit 130. For example, the user may generate a control signal for at least one joint of the robot 200 through the input unit 130, and may set the reference direction 310 by transmitting the control signal to each of the joints 211 through 216. However, this is merely an example, and the spirit of the present disclosure is not limited thereto.

The controller 110 according to an embodiment of the present disclosure may calculate angles of M joints from among the N joints of the robot 200 to correspond to the teaching of the user with respect to the robot 200. Also, the controller 110 may drive the M joints to correspond to the angles of the M joints calculated by the above process. In this case, M may be a natural number less than N that is the number of joints of the robot 200.

When 'a joint is driven to correspond to an angle', it may mean that the joint is rotated to correspond to the angle. For example, assuming that an angle of the joint 211 before teaching is 0° and an angle calculated according to the teaching is -30°, when the 'joint 211 is driven to correspond to -30°', it may mean that the controller 110 rotates the joint 211 in a negative direction by 30°.

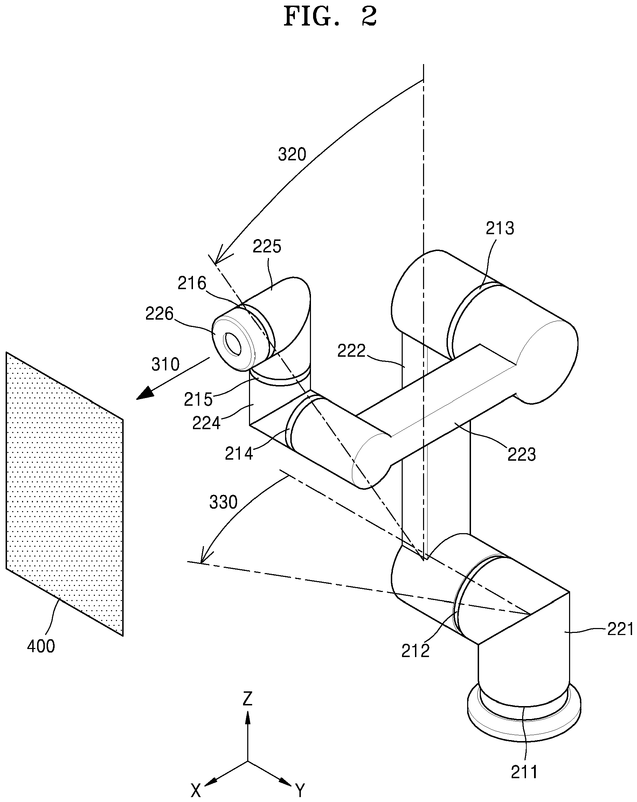

FIG. 2 is a view for describing a method performed by the controller 110 to control the robot 200 according to the teaching of a user according to an embodiment of the present disclosure.

For convenience of explanation, it is assumed that the reference direction 310 is set to a direction perpendicular to a working plane 400 in a space according to the above process, and the teaching of the user includes a manipulation of rotating the joint 211 that is a first joint in a direction 330 and the joint 212 that is a second joint in a direction 320. Also, it is assumed that the controller 110 calculates angles of three joints 211, 212, and 213 according to the teaching (i.e., M=3).

In this case, the controller 110 according to an embodiment of the present disclosure may calculate angles of three joints from among six joints to correspond to the teaching of the user as described above. Also, the controller 110 may drive the three joints to correspond to the calculated angles of the respective joints.

For example, the controller 110 may calculate angles of the joints 211 through 213 that are first through third joints to correspond to the teaching of the user. In this case, because the teaching of the user includes only a manipulation for the first joint 211 and the second joint 212 according to the above assumption, the controller 110 may calculate angles of only the first joint 211 and the second joint 212. The controller 110 may also calculate a rotation angle of the third joint 213 that is the same as a previous angle (because there is no change in the angle).

Next, the controller 110 may drive the first joint 211 and the second joint 212 to correspond to the calculated angles of the respective joints. The controller 110 may drive the third joint 213 to maintain its current angle.

The controller 110 according to an embodiment of the present disclosure may calculate angles of remaining joints so that the end 226 faces in the reference direction 310, based on the angles of the M joints calculated by the above process.

For example, when the controller 110 calculates angles of the three joints 211 through 213 according to the teaching of the user as described above, the controller 110 may calculate angles of the remaining joints 214, 215, and 216 so that the end 226 faces in the reference direction 310.

In this case, the controller 110 may calculate the angles of the remaining joints 214, 215, and 216 according to various methods. For example, the controller 110 may calculate the angles of the remaining joints 214 through 216, based on the angles of the M joints 211 through 213 calculated by the above process and 3D modeling data of the robot 200 including information about the joints 211 through 216 and the parts 221 through 226 for connecting the joints 211 through 216 of the robot 200. However, this is merely an example, and the spirit of the present disclosure is not limited thereto.

Next, the controller 110 according to an embodiment of the present disclosure may drive the remaining joints 214 through 216 based on the calculated angles of the remaining joints 214 through 216.

Accordingly, in the articulated robot according to the present disclosure, the end 226 may always face in a constant direction, despite the teaching or manipulation of the user.

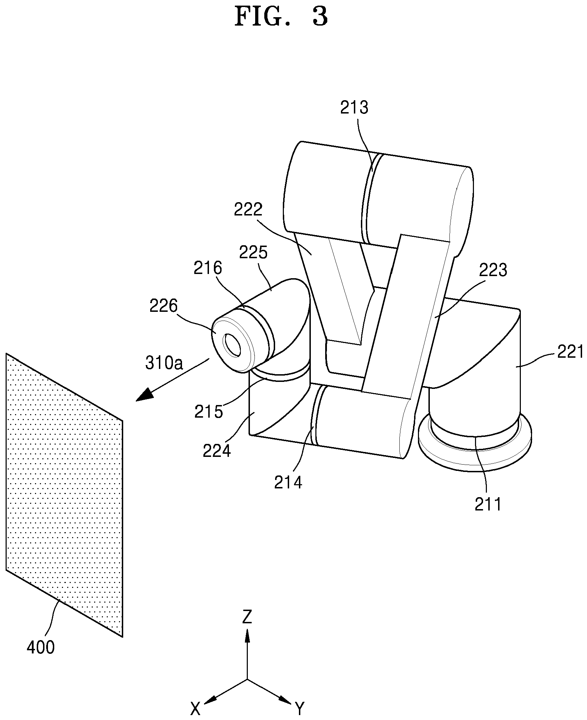

FIG. 3 is a view for describing a direction 310a of the end 226 after teaching of the robot 200 according to an embodiment of the present disclosure.

For convenience of explanation, like in FIG. 2, it is assumed that the reference direction 310 is set to a direction perpendicular to the working plane 400 in a space, and the teaching of a user includes a manipulation of rotating the first joint 211 in the direction 330 and the second direction 212 in the direction 320 as shown in FIG. 2. Also, it is assumed that the controller 110 drives three joints 211, 212, and 213 according to the teaching.

As described above, the controller 110 according to an embodiment of the present disclosure may calculate angles of the remaining joints 214, 215, and 216 so that the end 226 faces in the reference direction 310 according to the teaching of the user, and may operate the remaining joints 214, 215, and 216 according to the calculated angles. Accordingly, the direction 310a in which the end 226 faces may be the same as the reference direction 310 that is initially set and may be perpendicular to the working plane 400.

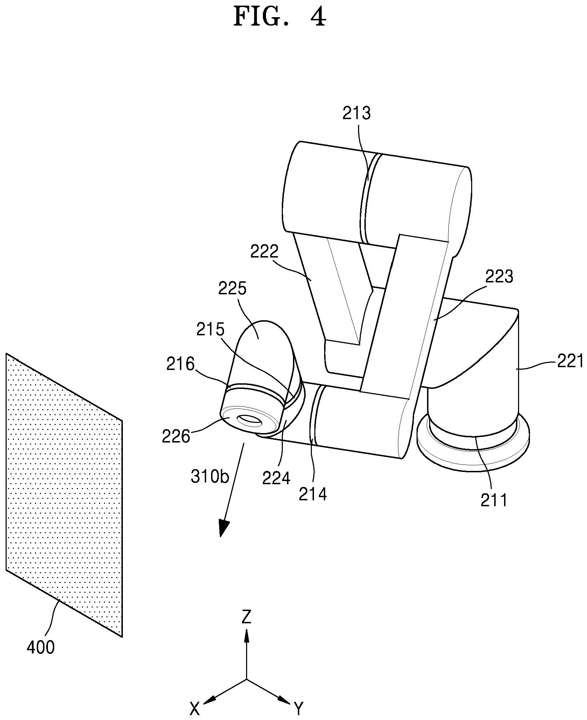

FIG. 4 is a view for describing a direction 310b of the end 226 after teaching of the robot 200 according to the prior art.

For convenience of explanation, like in FIG. 2, it is assumed that the reference direction 310 is set to a direction perpendicular to the working plane 400 in a space, and the teaching of a user includes a manipulation of rotating the first joint 211 in the direction 330 and the second joint 212 in the direction 320 as shown in FIG. 2. Also, it is assumed that the controller 110 drives three joints 211 through 213 according to the teaching.

When the controller 110 does not calculate angles of remaining joints 214 through 216 in the teaching of the user or thus does not operate the remaining joints 214 through 216, the direction 310b in which the end 226 faces may be different from the reference direction 310 that is initially set and may not be perpendicular to the working plane 400 as shown in FIG. 4.

As such, the prior art has a problem in that the end 226 of the robot 200 is difficult to satisfy a certain requirement (e.g., a requirement for facing in a specific direction) according to the teaching of the user.

Furthermore, the prior art has a problem in that, although the teaching of the user with respect to all of the joints 211 through 216 is performed and the user manipulates a direction in which the end 226 faces to a direction perpendicular to the working plane 400, it may be difficult to determine whether the manipulated direction is accurately perpendicular to the working plane 400 and the direction in which the end 226 faces may be easily changed when angles of some joints are corrected.

The present disclosure may solve the problems by controlling teaching to be performed on some joints of the articulated robot and controlling remaining joints to satisfy a certain requirement.

In this case, joints on which teaching may be performed may be at least one. Joints that operate to satisfy a certain requirement may be at least three, and may be joints continuous and closest to an end from among a plurality of joints.

A tool according to the purpose and/or use of the robot 200 may be attached to the end 226 of the robot 200 according to an embodiment of the present disclosure. For example, the tool attached to the end 226 may be an image acquisition device for obtaining an image of a target object. In this case, the robot 200 may be used for the purpose of obtaining an image in order to check an assembly state of the target object.

The above-described method may be used for calibration of the robot 200. For example, an operation error or the like of the robot 200 may be checked by locating the end of the robot 200 at a plurality of points on a board for calibration and then checking an angle of each joint at each point. However, this is merely an example, and the spirit of the present disclosure is not limited thereto.

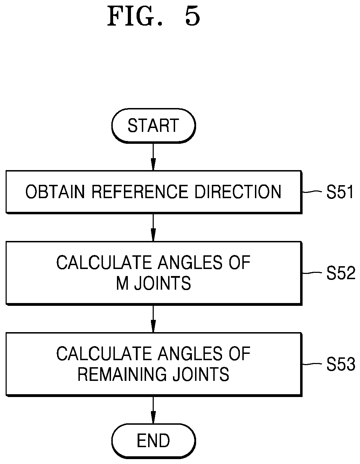

FIG. 5 is a flowchart for describing a method of teaching a robot performed by the robot teaching device 100 of FIG. 1. The same description as that made with reference to FIGS. 1 through 4 will not be provided here.

The robot teaching device 100 according to an embodiment of the present disclosure may obtain the reference direction 310 in which the end 226 of the robot 200 is to face (S51).

The term 'reference direction 310' used herein may refer to a direction in which the end 226 of the robot 200 is to face, despite a change in a posture of the robot 200 according to teaching. In this case, the reference direction may be a direction perpendicular to a working plane in a 3D space, or a southward direction.

The reference direction 310 may be obtained by using the teaching of a user with respect to the reference direction 310. For example, the user may set the reference direction 310 by physically manipulating each part of the robot 200 including the end 226 so that the end 226 of the robot 200 faces in the reference direction 310 that is to be set by the user.

Also, the reference direction 310 may be obtained when the user manipulates the input unit 130. For example, the user may generate a control signal for at least one joint of the robot 200 through the input unit 130, and may set the reference direction 310 by transmitting the control signal to each of the joints 211 through 216. However, this is merely an example, and the spirit of the present disclosure is not limited thereto.

The robot teaching device 100 according to an embodiment of the present disclosure may calculate angles of M joints from among N joints of the robot 200 to correspond to the teaching of the user with respect to the robot 200(S52). Also, the robot teaching device 100 may drive the M joints to correspond to the angles of the M joints calculated by the above process. In this case, M may be a natural number less than N that is the number of joints of the robot 200.

When a 'joint is driven to correspond to an angle', it may mean that the joint is rotated to correspond to the angle. For example, assuming that an angle of the joint 211 before teaching is 0° and an angle calculated according to teaching is -30°, when the 'joint 211 is driven to correspond to -30°', it may mean that the robot teaching device 100 rotates the joint 211 in a negative direction by 30°.

Referring back to FIG. 2, it is assumed that the reference direction 310 is set to a direction perpendicular to the working plane 400 in a space according to the above process, and the teaching of the user includes a manipulation of rotating the first joint 211 in the direction 330 and the second joint 212 in the direction 320. Also, it is assumed that the robot teaching device 100 calculates angles of three joints 211, 212, and 213 according to the teaching(i.e., M=3).

In this case, the robot teaching device 100 according to an embodiment of the present disclosure may calculate angles of three joints from among six joints to correspond to the teaching of the user as described above. Also, the robot teaching device 100 may drive the three joints to correspond to the calculated angles of the respective joints.

For example, the robot teaching device 100 may calculate angles of the first through third joints 211 through 213 to correspond to the teaching of the user. In this case, because the teaching of the user includes only a manipulation for the first joint 211 and the second joint 212 according to the above assumption, the robot teaching device 100 may calculate angles of only the first joint 211 and the second joint 212. The robot teaching device 100 may also calculate a rotation angle of the third joint 213 that is the same as a previous angle (because there is no change in the angle).

Next, the robot teaching device 100 may drive the first joint 211 and the second joint 212 to correspond to the calculated angles of the respective joints. The robot teaching device 100 may drive the third joint 213 to maintain its current angle.

The robot teaching device 100 according to an embodiment of the present disclosure may calculate angles of remaining joints so that the end 226 faces in the reference direction 310, based on the angles of the M joints calculated by the above process (S53).

For example, when the robot teaching device 100 calculates the angles of the three joints 211 through 213 according to the teaching of the user as described above, the robot teaching device 100 may calculate angles of the remaining joints 214, 215, and 216 so that the end 226 faces in the reference direction 310.

In this case, the robot teaching device 100 may calculate the angles of the remaining joints 214, 215, and 216 according to various methods. For example, the controller 110 may calculate the angles of the remaining joints 214 through 216, based on the angles of the M joints 211 through 213 calculated by the above process and 3D modeling data of the robot 200 including information about the joints 211 through 216 and the parts 221 through 226 for connecting the joints 211 through 216 of the robot 200. However, this is merely an example, and the spirit of the present disclosure is not limited thereto.

Next, the robot teaching device 100 according to an embodiment may drive the remaining joints based on the calculated angles of the remaining joints 214 through 216.

Accordingly, in the articulated robot according to the present disclosure, the end 226 may always face in a constant direction, despite the teaching or manipulation of the user.

Referring back to FIGS. 2 and 3, it is assumed that the reference direction 310 is set to a direction perpendicular to the working plane 400 in a space, and the teaching of the user includes a manipulation of rotating the first joint 211 in the direction 330 and the second joint 212 in the direction 320 as shown in FIG. 2. Also, it is assumed that the robot teaching device 100 drives three joints 211, 212, and 213 according to the teaching.

As described above, the robot teaching device 100 according to an embodiment of the present disclosure may calculate angles of the remaining joints 214, 215, and 216 so that the end 226 faces in the reference direction 310 according to the teaching of the user, and may operate the remaining joints 214, 215, and 216 according to the calculated angles. Accordingly, the direction 310a in which the end 226 faces may be the same as the reference direction 310 that is initially set and may be perpendicular to the working plane 400.

A description will be made again with reference to FIG. 4 that describes the direction 310b of the end 226 after teaching of the robot 200 according to the prior art. For convenience of explanation, like in FIG. 2, it is assumed that the reference direction 310 is set to a direction perpendicular to the working plane 400 in a space, and the teaching of the user includes a manipulation of rotating the first joint 211 in the direction 330 and the second joint 212 in the direction 320 as shown in FIG. 2. Also, it is assumed that the robot teaching device 100 drives three joints 211 through 213 according to the teaching.

When the robot teaching device 100 does not calculate angles of remaining joints 214 through 216 in the teaching of the user or thus does not operate the remaining joints 214 through 216, the direction 310b in which the end 226 faces may be different from the reference direction 310 that is initially set and may not be perpendicular to the working plane 400 as shown in FIG. 4.

As such, the prior art has a problem in that the end 226 of the robot 200 is difficult to satisfy a certain requirement (e.g., a requirement for facing in a specific direction) according to the teaching of the user.

Furthermore, the prior art has a problem in that, although the teaching of the user with respect to all of the joints 211 through 216 is performed and the user manipulates a direction in which the end 226 faces to a direction perpendicular to the working plane 400, it may be difficult to determine whether the manipulated direction is accurately perpendicular to the working plane 400 and the direction in which the end 226 faces may be easily changed when angles of some joints are corrected.

The present disclosure may solve the problems by controlling teaching to be performed on some joints of the articulated robot according to the present disclosure and controlling remaining joints to satisfy a certain requirement.

In this case, joints on which teaching may be performed may be at least one. Joints that operate to satisfy a certain requirement may be at least three, and may be joints continuous and closest to an end from among a plurality of joints.

A tool according to the purpose and/or use of the robot 200 may be attached to the end 226 of the robot 200 according to an embodiment of the present disclosure. For example, the tool attached to the end 226 may be an image acquisition device for obtaining an image of a target object. In this case, the robot 200 may be used for the purpose of obtaining an image in order to check an assembly state of the target object.

The above-described method may be used for calibration of the robot 200. For example, an operation error or the like of the robot 200 may be checked by locating the end of the robot 200 at a plurality of points on a board for calibration and then checking an angle of each joint at each point. However, this is merely an example, and the spirit of the present disclosure is not limited thereto.

The present disclosure may be embodied as computer-readable code in a computer-readable recording medium. The computer-readable recording medium may be any recording apparatus capable of storing data that is read by a computer system. Examples of the computer-readable recording medium include read-only memories (ROMs), random-access memories (RAMs), compact disc (CD)-ROMs, magnetic tapes, floppy disks, and optical data storage devices. Also, the computer-readable medium may be distributed among computer systems that are interconnected through a network so that computer-readable code is stored and executed in a distributed fashion. Functional programs, code, and code segments for accomplishing the present disclosure may be easily derived by programmers in the art to which the present disclosure pertains.

While the present disclosure has been particularly shown and described with reference to embodiments thereof, they are provided for the purposes of illustration and it will be understood by one of ordinary skill in the art that various modifications and equivalent other embodiments may be made from the present disclosure.

## Claims

1. A method of teaching a robot capable of maintaining constant a direction in which an end faces and comprising N joints (N is a natural number), the method comprising:
obtaining a reference direction in which the end is to face;
calculating angles of M joints (M is a natural number, and N>M) from among the N joints to correspond to teaching of a user with respect to the robot; and
calculating angles of remaining joints so that the end faces in the reference direction, based on the angles of the M joints,
wherein the remaining joints are joints other than the M joints from among the N joints.

2. The method of claim 1, wherein the teaching is performed by a physical manipulation of the user with respect to the robot,
wherein the calculating of the angles of the M joints comprises driving the M joints to correspond to the angles of the M joints according to the physical manipulation of the user with respect to the robot.

3. The method of claim 1, wherein
the teaching is performed by a control signal for at least one of the M joints, and
the control signal is generated by a manipulation of an input unit by the user,
wherein the calculating of the angles of the M joints comprises driving at least one of the M joints according to the control signal for the at least one of the M joints.

4. The method of claim 1, wherein the calculating of the angles of the remaining joints comprises driving the remaining joints based on the calculated angles of the remaining joints.

5. The method of claim 1, wherein the remaining joints are joints continuous and closest to the end from among the N joints.

6. The method of claim 5, wherein N is 6, and M is 3.

7. The method of claim 1, wherein the reference direction is a direction perpendicular to a working plane of the robot.

8. A computer program stored in a medium to execute the method of any of claims 1 through 7 by using a computer.

9. A device for teaching a robot capable of maintaining constant a direction in which an end faces and comprising N joints (N is a natural number), the device comprising
a controller,
wherein the controller is configured to:
obtain a reference direction in which the end is to face;
calculate angles of M joints (M is a natural number, and N>M) from among the N joints to correspond to teaching of a user with respect to the robot; and
calculate angles of remaining joints so that the end faces in the reference direction, based on the angles of the M joints,
wherein the remaining joints are joints other than the M joints from among the N joints.

10. The device of claim 9, wherein the teaching is performed by a physical manipulation of the user with respect to the robot,
wherein the controller is further configured to drive the M joints to correspond to the angles of the M joints according to the physical manipulation of the user with respect to the robot.

11. The device of claim 9, wherein
the teaching is performed by a control signal for at least one of the M joints, and
the control signal is generated by a manipulation of an input unit by the user,
wherein the controller is further configured to drive at least one of the M joints according to the control signal for the at least one of the M joints.

12. The device of claim 9, wherein the controller is further configured to drive the remaining joints based on the calculated angles of the remaining joints.

13. The device of claim 9, wherein the remaining joints are joints continuous and closest to the end from among the N joints.

14. The device of claim 13, wherein N is 6, and M is 3.

15. The device of claim 1, wherein the reference direction is a direction perpendicular to a working plane of the robot.

16. A system for teaching a robot to maintain constant a direction in which an end of the robot faces during teaching, the system comprising:
the robot comprising N joints (N is a natural number); and
a robot teaching device configured to control the robot to maintain constant the direction in which the end of the robot faces,
wherein the robot teaching device is further configured to
obtain a reference direction in which the end of the robot is to face,
calculate angles of M joints (M is a natural number, and N>M) from among the N joints to correspond to teaching of a user with respect to the robot, and
calculate angles of remaining joints so that the end faces in the reference direction, based on the angles of the M joints,
wherein the remaining joints are joints other than the M joints from among the N joints.

17. The system of claim 16, wherein the teaching is performed by a physical manipulation of the user with respect to the robot,
wherein the robot teaching device is further configured to drive the M joints to correspond to the angles of the M joints according to the physical manipulation of the user with respect to the robot.

18. The system of claim 16, wherein
the teaching is performed by a control signal for at least one of the M joints, and
the control signal is generated by a manipulation of an input unit by the robot teaching device of the user,
wherein the robot teaching device is further configured to drive at least one of the M joints according to the control signal for the at least one of the M joints.

19. The system of claim 16, wherein the robot teaching device is further configured to drive the remaining joints based on the calculated angles of the remaining joints.

20. The system of claim 16, wherein the remaining joints are joints continuous and closest to the end from among the N joints.
